# EUROPEAN PATENT SPECIFICATION

(11) **EP 3 498 614 B1**
(45) Date of publication and mention of the grant of the patent: **08.09.2021**
(21) Application number: 17207530.1
(22) Date of filing: 14.12.2017
(51) Int. Cl.: B65B 13/02, B65B 13/18, H01B 13/012, B65B 27/10, B65B 61/14, H02G 3/00

(54) **MOUNTING MODULE FOR A BINDING TOOL, SYSTEM AND METHOD OF ATTACHING ONE OR MORE CLIPS TO AN OBJECT**
MONTAGEMODUL FÜR EIN BINDEWERKZEUG, SYSTEM UND VERFAHREN ZUR BEFESTIGUNG EINER ODER MEHRERER KLAMMERN AN EINEM OBJEKT
MODULE DE MONTAGE POUR UN OUTIL DE LIAISON, SYSTÈME ET PROCÉDÉ DE FIXATION D'UN OU DE PLUSIEURS PINCES À UN OBJET

(43) Date of publication of application: 19.06.2019
(73) Proprietor: HellermannTyton GmbH, 25436 Tornesch (DE)
(72) Inventor: SCHWINN, Andreas, 25436 UTERSEN (DE); FUKUDA, Taro, 22529 HAMBURG (DE); MOYZISCHEWITZ, Marcon, 22763 HAMBURG (DE)
(74) Representative: Manitz Finsterwald Patent- und Rechtsanwaltspartnerschaft mbB

(56) References cited:
- EP-A1- 0 688 072
- EP-A1- 1 842 775
- EP-A2- 2 672 490
- US-A- 5 368 261
- US-A- 5 430 996
- US-A- 5 694 678
- US-A- 6 019 142

## Description

The present invention relates to a mounting module for a binding tool, the binding tool being configured to attach a strap, such as a cable tie, to at least one object. The invention further relates to a system of mounting modules and to a method of attaching one or more clips to one or more objects.

Objects, such as conduits, cables, wiring looms etc. are used in many applications, such as in vehicles, in order to connect different installations of e.g. the vehicle to one another. By way of example, a wiring loom or harness comprising a plurality of electric lines connects various lights within a vehicle to a vehicle controller that activates the lights in dependence on an input from e.g. the vehicle operator or a light sensor. In order to protect the electric lines from coming into contact with mechanical parts present within the vehicle, the electric lines present within the wiring looms are held together e.g. using a strap, such as a cable tie or the like, and are guided throughout the vehicle at defined positions. A size of the wiring loom depends on the number of electric lines currently being guided at the respective defined position and hence is not constant throughout the vehicle.

Moreover, the wiring looms are guided throughout the vehicle in a manner complementary to the shape of the part of the vehicle at which they are currently guided. To hold the wiring looms in position and to guide these between the different installations present at different positions within the vehicle, the wiring loom is also attached to e.g. the vehicle chassis or body via clips or the like.

The positions of attachment of the respective clips vary with respect to their angle and orientation of the respective contour of the part of the vehicle to which they are attached.

Binding tools, such as cable tie tools can be used to attach straps, such as cable ties, to the object and optionally also to attach the strap to the clip and to attach the clip to the object. Such cable tie tools are either manually operated or comprise automatic systems that bundle the strap around the object and optionally also attach the clip to the object. The quality of the attachment of the strap and the clip to the object depends on the diameter of the object because the prior art apparatus are generally optimized with respect to one clip orientation only and cannot readily be altered in dependence on the size of the object to which the strap and the clip are attached.

Moreover, due to the fact that the cable tie tool is designed for one clip orientation and not necessarily with a view to attaching a clip at a defined position with a defined orientation at various objects with varying diameters, a process of positioning and orientating the clip is very challenging, as the position and orientation of the clip also changes in dependence on the object diameter during the bundling in prior art binding tools.

Binding tools and method of using binding tools are known from the following documents US6,019,142, US5,368,261, EP1842775A1, US5,430,996, EP2672490A2, and US5,694,678 and EP0688072A1.

For this reason it is an object of the invention to make available an apparatus by means of which the straps and optionally clips can be attached to objects of various diameter in a more facile and repeatable manner. It is a further object of the invention to make available an apparatus by means of which a binding tool can attach a clip to at least one object at a defined position and orientation.

This object is satisfied by a mounting module for a binding tool in accordance with claim 1. Advantageous embodiments of the invention are defined in the dependent claims, the specific description and the drawings.

By forming the moveable part such that it can execute at least one of a linear movement and a rotational movement relative to the base part and having the moveable part configured such that a position thereof can be set relative to the object receiving portion, the position of the moveable part relative to the object receiving portion can be set to conform to an outer diameter of the at least one object to be placed at the object receiving portion.

In comparison to prior art binding tools the mounting module for the binding tool presented herein allows an automated and controlled movement of the binding tool towards the object e.g. a harness, rather than moving the harness towards the binding tool. This causes a more reliable and reproducible attachment of straps to objects such as harnesses.

The linear and rotational direction of movement of the moveable part can be adjusted to match the harness diameter. Having the option of adapting the direction of movement to the harness diameter also permits a more reliable attachment of straps to objects. For this reason automated bundling processes can be executed faster, repeatable and more reliable in comparison to prior art binding tools.

Preferably the object receiving portion further comprises a clip receiving portion that is configured to receive a clip that can be attached to the at least one object by means of the strap.

By forming the mounting module such that it can be configured to adapt to the diameter of an object or bundle of objects, such as a wiring loom or harness, to which a strap is connected, it is possible to pre-define an orientation of the clip that should be attached to the object or bundle of objects as the positioning and orientating of the clips primarily depends on the diameter of the object to which it is attached. Thus, an automated bundling process in which a clip is attached to the object or bundle of objects can be executed faster, repeatable and more reliable in comparison to prior art binding tools. The problem of the clip positioning and orientation is further solved by not moving the clip with the harness until the cable tie is tensioned. Instead, the binding tool moves to the harness and the clip such that the clip can be attached at the pre-defined position with the pre-defined orientation.

It is preferred if the clip receiving portion is arranged in a top surface of the object receiving portion and the moveable part is configured moveable relative to the clip receiving portion such that a resultant position and/or orientation of the clip can be set relative to an object to which the clip can be attached. In this way the position and orientation of a clip can be varied in dependence on an outer diameter of the object and optionally also in dependence on a desired direction of use of the clip when the object and the clip are attached to e.g. a vehicle chassis.

Advantageously the clip receiving portion or an insert that can be received in the object receiving portion to form the clip receiving portion is adapted to specific shapes and sizes of clips and with the clip receiving portion and/or the insert optionally further comprising a guide groove by means of which the strap can be guided during the attachment of the strap to the clip and to the at least one object.

In this way clips of different shapes and sizes can be used in the mounting module and can subsequently be attached to various objects. Moreover, the presence of the guide groove aids in the attachment of the strap to the clip and the at least one object so that the attachment thereof can be executed faster, repeatable and more reliable in comparison to the prior art.

In a preferred embodiment the mounting module further comprises a pneumatic mechanism to bring about the movement of the binding tool receiving portion relative to the base part and the clip receiving portion, preferably wherein the pneumatic mechanism is pivot mounted at the base part. Pneumatic drives are comparatively simple to control and actuate and provide reliable drives for bringing about the desired movement between the moveable part and the base part.

It is preferred if the guide means comprises two or more ball bearings or two or more inserts of a friction reducing material, such as POM, UHMW, Nylon, Acetal, PTFE, PET, PBT, PPS, PEEK and combinations thereof or the like. Ball bearings and inserts of a friction reducing material respectively facilitate the support function between two components and enable a movement to take place between the two components, as well as being durable while being comparatively cheap.

Preferably the guide means are aligned such that they form a pivot axis about which the moveable part can be tilted towards the object receiving portion and thereby permit a rotational movement of the moveable part relative to the base part to take place.

Advantageously the guide means are slideably supported at the base part, in particular are linearly, especially horizontally, slideably supported at the base part. Such a linear movement of the ball bearings permits a linear movement of the moveable part relative to the base part to take place.

On the basis of the combined rotational and linear movement of the moveable part relative to the base part the mounting module comprises eccentric rotatable parts that are attached to the base part.

Preferably the base part comprises two at least substantially U-shaped grooves that are configured to support the two ball bearings. U-shaped grooves can be used to aid and guide the two bearings or inserts respectively and thereby facilitate the bringing about of the rotational and linear movement of the moveable part relative to the base part.

Advantageously the mounting module further comprises two bushes arranged between the base part and the moveable part. Bushes permit a simple attachment of parts to one another with one of the parts optionally being able to be moveable relative to the other part. In this connection it is preferred if each of the bushes comprises an elongate slot, with the moveable part having two support parts and with each support part being supported in one of the elongate slots. In this way the two bushes are configured to slide at a guide formed by the support parts which are components of the eccentric rotatable parts.

It is especially preferred if the two bushes are configured to be rotated relative to the base part such that the position of the object receiving portion can be set relative to the moveable part. By forming the two bushes having the elongate slots present therein such that they can be rotated relative to the base part means that the spacing of the object receiving portion relative to the moveable part can be set, in particular in dependence on the object diameter. The elongate slots and hence the bushes aid the eccentric movement of the eccentric rotatable parts.

Preferably at least one of the one or more binding tool receiving portions comprises at least one locking means configured to intermittently fix the binding tool to the moveable part, preferably wherein the two binding tool receiving portions each have one locking means that are arranged opposite one another at either sides of the object receiving portion.

In this way the mounting module comprises an integrated locking mechanism. The locking mechanism can be configured such that the tool is locked to the mounting module during the process of attaching the strap to the at least one object in order to avoid a faulty connection of the strap to the at least one object to take place because an operator prematurely removes the binding tool from the mounting module. This means that the locking mechanism can be configured to lock and unlock the binding tool in dependence on whether a strap is currently being attached or not.

Preferably the mounting module further comprises at least one sensor that is coupled to the moveable part and is preferably configured to detect the presence and/or absence of a jaw of the binding tool. In this way the position of e.g. the upper jaw of the binding tool can be detected. Knowing whether the upper jaw is in the vicinity of the moveable part or not, permits e.g. the actuation of the pneumatic cylinder to take place.

Advantageously the mounting module further comprises an evaluation unit, with the evaluation unit being configured to evaluate sensor signals provided by the sensor in dependence on the presence of the jaw of the binding tool and to actuate a movement of the moveable part in dependence on the sensor signals; and/or with the evaluation unit being configured to control and actuate the movement of the moveable part relative to the base part. Thereby the evaluation unit controls the operation of the mounting module.

According to a further aspect the present invention relates to a system comprising one or more mounting modules as described herein and a binding tool, wherein the one or more mounting modules are configured to be mounted on a mounting surface and optionally further comprising at least one of the mounting surface, a plurality of straps and a plurality of clips.

The advantages discussed in the foregoing in relation to one mounting module also hold true for the system particularly if this comprises two or three or more mounting modules in which two or three or more clips can be attached to an object at a pre-defined position and orientation that could e.g. resemble the contour of part of a vehicle to which the object is subsequently attached by means of the clips.

Preferably the mounting modules can be mounted on the mounting surface such that they form a common object receiving surface that resembles the contour of the device to which the clips and the object are subsequently attached, with the clip receiving portions of the respective mounting modules being set to resemble the contour.

According to a further aspect the present invention relates to a method of attaching one or more clips to an object, the object having a length extending generally in a longitudinal direction, wherein the one or more clips are each attached to the object by means of a strap, wherein the strap is attached to the object and the one or more clips in such a way that the one or more clips extend from the object in a predefined radial direction with respect to the longitudinal direction.

According to a further aspect the present invention relates to an object comprising a plurality of clips attached thereto, the object having a length extending generally in a longitudinal direction and with each of the plurality of clips extending from the object in a predefined radial direction, with at least some of the plurality of clips having an orientation in the radial direction that differs from the orientation of the remaining clips of the plurality of clips.

Further embodiments of the invention are described in the following description of the Figures. The invention will be explained in the following in detail by means of embodiments and with reference to the drawing in which is shown:
- Fig. 1: a perspective view of a mounting module;
- Fig. 2: a photograph of a system comprising a mounting module and a binding tool;
- Fig. 3: a side view of a further system in a start position;
- Fig. 4: a side view of the system of Fig. 3 in an end position;
- Fig. 5: a perspective part sectional view of a further system in a start position;
- Fig. 6: a perspective part sectional view of the system of Fig. 5 in an end position; and
- Fig. 7: a photograph of an object having a plurality of clips attached thereto.

In the following the same reference numerals will be used for parts having the same or equivalent function. Any statements made having regard to the direction of a component are made relative to the position shown in the drawing and can naturally vary in the actual position of application.

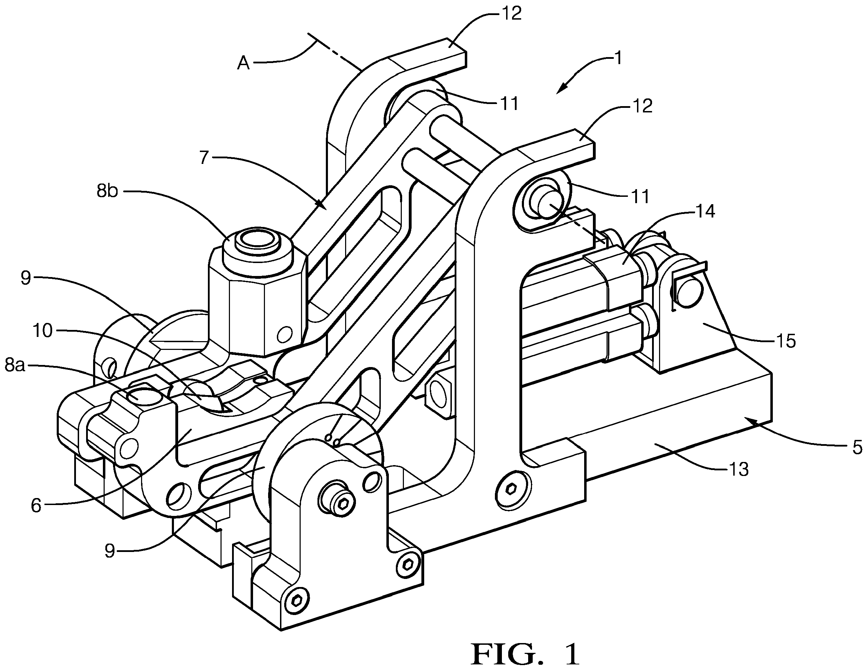

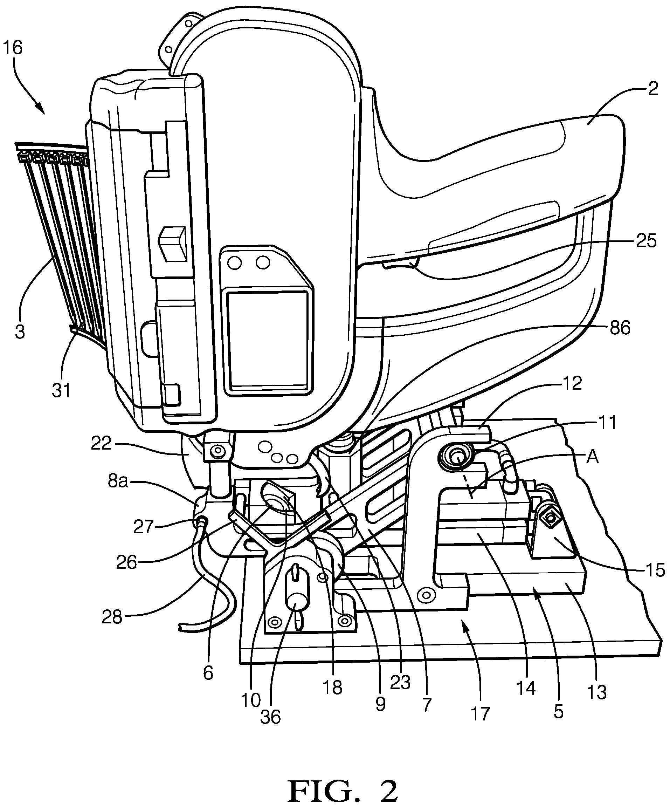

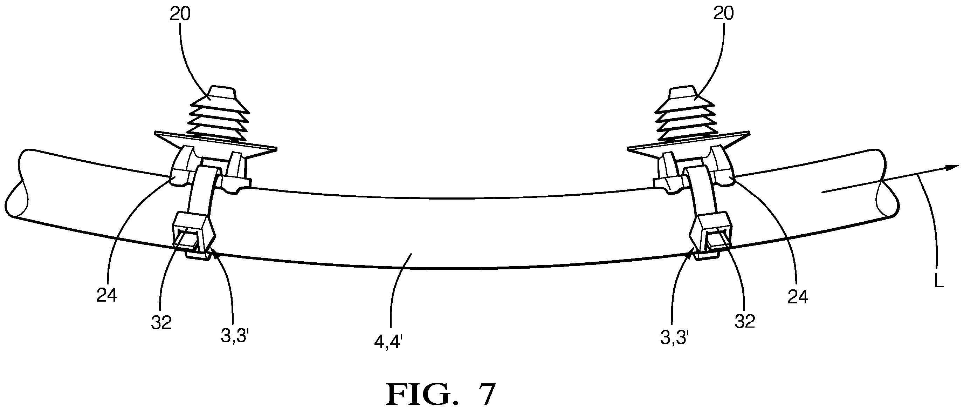

Fig. 1 shows a perspective view of a mounting module 1. The mounting module 1 is configured to receive and hold a binding tool 2 (see Fig. 2). The binding tool 2 is configured to attach a strap 3 (see Fig. 2), such as a cable tie 3' (see Fig, 2), to at least one object 4 (see Fig. 7).

Fig. 1 shows that the mounting module 1 comprises a base part 5 having an object receiving portion 6; and a moveable part 7 having two binding tool receiving portions 8a, 8b. The binding tool receiving portions 8a, 8b are configured to hold the binding tool 2 at a fixed position relative to the moveable part 7.

In use of the mounting module 1 the moveable part 7 is linearly and rotationally moveable relative to the base part 5 and the object receiving portion 6. Moreover, the moveable part 7 is configured such that a position thereof can be set relative to the object receiving portion 6. The object receiving portion 6 is configured to hold a part of an object 4 or of a plurality of objects 4 while the strap 3 is being attached to the object 4 respectively to the plurality of objects 4. At least one of the base part 5 and the moveable part 7 is preferably formed from metal or a metal alloy.

In particular an angle of inclination of a top surface 10 of the object receiving portion 6 relative to the moveable part 7 is set by means of the bushes 9. The two bushes 9 are arranged between the base part 5 and the moveable part 7.

The moveable part 7 is further supported at the base part 5 by means of two guide means present in the form of two ball bearings 11. The two ball bearings 11 are aligned relative to one another such that they form a pivot axis A about which the moveable part 7 can be tilted towards the object receiving portion 6.

Moreover, the two ball bearings 11 are linearly slideably supported at the base part 5. To this end the base part 5 comprises two U-shaped grooves 12 that are configured to support the two ball bearings 11. The two U-shaped grooves 12 are arranged in parallel to a base plate 13 of the base part 5, such that the ball bearings 11 can linearly slide in the horizontal direction in Fig. 1.

A pneumatic mechanism 14 is pivot mounted at the base part 5 at a mount 15 present in the form of two brackets, with the mount 15 being arranged on the base plate 13. The pneumatic mechanism 14 is provided to bring about the movement of the binding tool receiving portions 8a, 8b relative to the base part 5 and the clip receiving portion 6.

Thus, the moveable part 7 is attached to the base part 5 via the bushes 9, the U-shaped grooves 12 and the pneumatic mechanism 14.

Fig. 2 shows a photograph of a system 16 comprising the mounting module 1 and the binding tool 2. The mounting module 1 is arranged on a mounting surface 17.

The object receiving portion 6 comprises a clip receiving portion 18 that is adapted to the specific shape and size of a clip 20 (see Fig. 7) that on use of the binding tool 2 is attached to the at least one object 4 by means of the strap 3.

The binding tool 2 comprises an upper jaw 22 and a lower jaw 23. The strap 3 is fed from a strap supply (not shown) to the binding tool 2. This is indicated in Fig. 2 by a plurality of cable ties 3' that are fed to the binding tool 2 on the left of the photograph. In the binding tool 2 the individual cable ties 3' are fed via the lower jaw 23 to the upper jaw 22 and back into the binding tool 2 for tensioning the cable tie 3'. An exemplary binding tool 2 and its precise method of operation are disclosed e.g. in WO2015/067444.

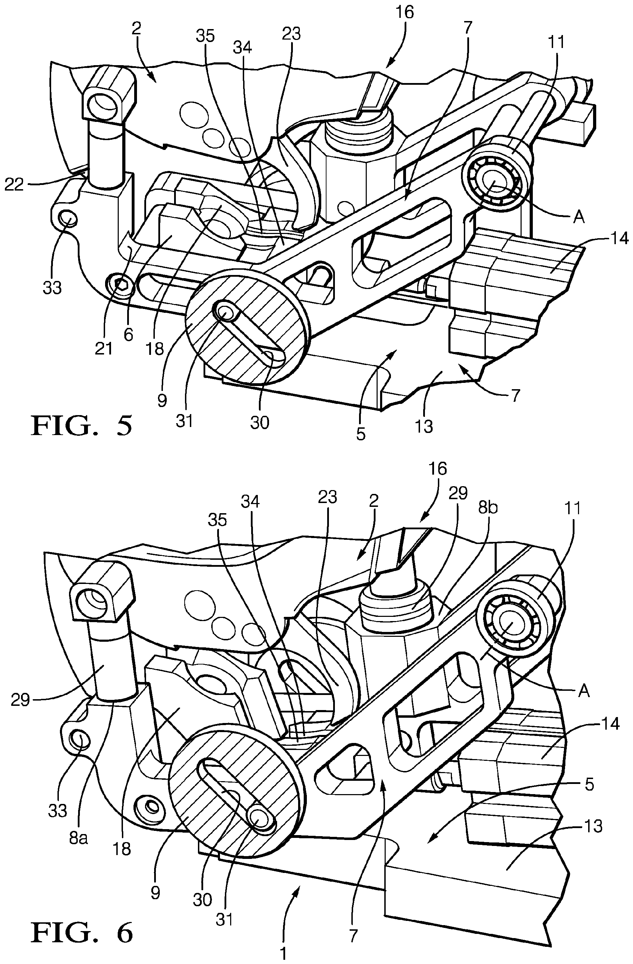

The clip receiving portion 18 optionally further comprises a guide groove 21 (see Fig. 5) by means of which the strap 3 and the lower jaw 23 can be guided towards the clip 20 during the attachment of the strap 3 to the clip 20 and to the at least one object 4.

On operating the binding tool 2 connected to the mounting module 1 for attaching the strap 3 to the clip 20 and the object 4, the upper jaw 22 is guided in the guide groove 21 towards the clip 20 and the lower jaw 23 is also guided towards the clip 20 such that the strap 3 is subsequently guided by the jaws 22, 23 through an eyelet 24 (see Fig. 7) of the clip 20 for attachment of the clip 20 to the object 4 by means of the strap 3. The binding tool 2 is operated by activating a trigger 25 of the binding tool 2.

In the present example the mounting surface 17 is a flat surface. It should however be noted that if two or more mounting modules 1 form the system 16 that the mounting surface 17 could be formed in such a way that positions of the object receiving portions 6 of the plurality of mounting modules 1 represent a contour of a part of a vehicle (not shown) to which the object 4 is subsequently connected by means of the clips 20 such that the mounting surface 17 has a contour that enables the positioning of the mounting modules 1 to follow the contour of e.g. the part of the vehicle to which the object 4 with the clips 20 attached thereto is subsequently fitted so that the clips 20 are attached at the object 4 with the desired pre-defined position and orientation. In this way the mounting modules 1 are arranged such that the subsequently formed object 4 having the clips 20 can be attached to the vehicle in a simple manner.

In order to increase the size of the support surface available for the at least one object 4 at the mounting module 1, the mounting module 1 has an object support 26. The object support 26 is arranged at at least one side, preferably at both sides, of the object receiving portion 6 as a further support surface to ensure the correct positioning and orientation of the object 4 at the mounting module 1, in order to further improve the correct positioning of the clip 20.

A sensor 27 is coupled to the moveable part 7 at an end of the moveable part disposed remote from the mount 15. The sensor 27 is arranged and configured to detect the presence of the upper jaw 22 of the binding tool 2 when the binding tool 2 is in operation and the upper jaw 22 engages the clip receiving portion 18.

The sensor 27 detects sensor signals and the sensor signals are forwarded to an evaluation unit (not shown) connected to the sensor 27 by means of a cable 28. The sensor signals are evaluated by the evaluation unit in order to effect a movement of the moveable part 7 towards the clip receiving portion 18, i.e. to bring about the activation of the pneumatic mechanism 14. Preferably the activation of the pneumatic mechanism 14 is timed, i.e. delayed, relative to the activation of the binding tool 2 to ensure that the binding tool 2 is pivoted to the object 4 for attachment of the strap 3 and the clip 20 to the object 4. In order to ensure the correct orientation of the clip 20 at the object 4, one has to avoid lifting the object 4 from the object receiving portion 6 prior to the completion of the tensioning of the strap 3.

In this connection it should be noted that the sensor 27 could also be configured to detect a different movement or parameter of the binding tool 2 in order to bring about the activation of the pneumatic mechanism 14.

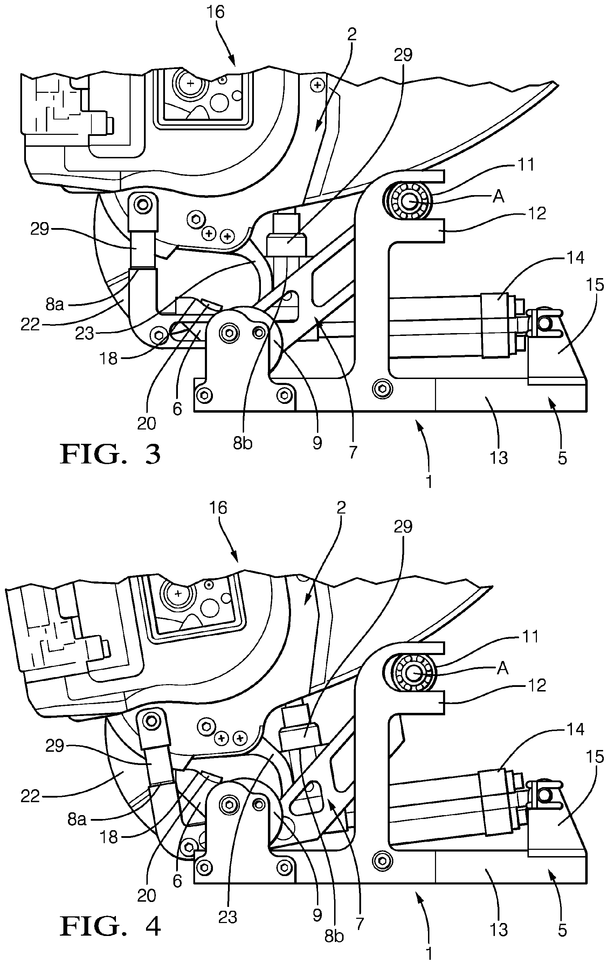

Fig. 3 shows a side view of a further system 16 in a start position, i.e. before the strap 3 is being guided via the jaws 22, 23. The binding tool receiving portions 8a, 8b respectively comprise locking means 29 that are configured to intermittently fix the binding tool 2 to the moveable part 7. The locking means 29 are arranged opposite one another at either sides of the object receiving portion 6.

The locking means are preferably activated when an operator activates the trigger 25. The locking means 29 arranged on the left in Fig. 3 comprise a front pin holding member cooperating with a corresponding receptacle (both not shown) in the binding tool receiving portion 8a. The locking means 29 arranged on the right in Fig. 3 comprise a rear locking pin cooperating with a corresponding locking receptacle (both not shown) in the binding tool receiving portion 8b. Rather than using locking pins that engage corresponding receptacles alternative forms of locking means 29 could also be used.

Fig. 4 shows a side view of the system 16 of Fig. 3 in an end position. In the end position the moveable part 7 has been linearly and rotationally displaced relative to the clip receiving portion 18. In use of the cable tie tool 2 a head (not shown) of the strap 3 or cable tie 3' whose position is fixed within the binding tool 2 is guided to the clip 20, this, on the one hand, prevents the clip 20 from moving relative to the head and, on the other hand, ensures a correct positioning of the clip 20 at the object 4.

Fig. 5 shows a perspective part sectional view of a further system 16 in a start position. The two bushes 9 arranged at the base part each comprise an elongate slot 30. The moveable part 7 has two support parts 31 that are each supported in one of the elongate slots 30. The orientation of the elongate slots 30 relative to the base part 5 can be altered by rotating the bushes 9 relative to the base part 5. By means of this rotation and consequent change of the orientation of the elongate slot 30, the direction of the linear movement of the moveable part 7 can be controlled.

In this connection it should be noted that angle between the extent of the elongate slot 30 and the base plate 13 can be set within the range of -20° to 80°, preferably within the range of 0 to 60°. The angle can be indicated on the bushes 9 as shown in Fig. 1. In order to set the desired angle an operator can operate a fastener element, such as the wing nut 36 shown in Fig. 2 to loosen the bush 9, then rotate the bush 9 to the desired angle and re-tighten the wing nut 36.

The orientation of the elongate slots 30 enables an adjustment of the position of the moveable part 7 relative to the clip receiving portion 18 to be set in dependence on the diameter of the object 4 or bundles of objects 4 to which the clip 20 is attached by means of the strap 3. It should be noted that the support parts 31 could be journaled in further ball bearings that interact with the elongate slots 30 of the bushes 9.

A sensor housing 33 is further visible in the moveable part 7 that is configured to receive the sensor 27. The sensor housing 33 is oriented such that the sensor can detect whether the upper jaw 22 of the binding tool 2 is present or not.

The moveable part also comprises engagement means 34 that engage the clip receiving portion 18. The engagement means 34 can slide relative to the clip receiving portion 18. The engagement means 34 further comprise a groove 35 that aligns with the lower jaw 23 and thereby aids in guiding the strap 3 from the lower jaw 23 to the clip receiving portion 18.

Fig. 6 shows a perspective part sectional view of the further system 16 of Fig. 5 in the end position. The engagement means 34 are displaced downwardly relative to the clip receiving portion 18 together with the moveable part 7 in Fig. 6 in comparison to Fig. 5. In order to reduce the wear between the clip receiving portion 18 and the engagement means 34 it is preferable if the engagement means 34 comprise a material different from the clip receiving portion 18, for example, the clip receiving portion 18 is formed from a metal or a metal alloy, such as aluminum and the engagement means 34 is formed from plastic or the like.

Fig. 7 shows a photograph of an object 4 having a plurality of clips 20 attached thereto. The object 4 shown is an air-line 4' and comprises two clips 20. The air-line 4' has a length extending generally in a longitudinal direction L. Each of the clips 20 extends from the air-line 4' in a predefined radial direction. The orientation in the radial direction of the first clip 20 differs from the orientation of the second clip 20. Further clips 20 (not shown) could also be attached to the air-line 4' along the length thereof.

In use of the system 16, an operator places one clip 20 in the clip receiving portion 18 and then places the object 4 such as a harness on the object receiving portion 6. Depending on the outer diameter of the harness the operator adjusts the position of the bushes 9 to set the mounting module 1 such that it conforms to the outer diameter of the harness in such a way that the strap 3 can be ideally attached to the object 4 for the optimized and desired diameter.

The binding tool 2 is then placed at the mounting module 1 and is received by the binding tool receiving portions 8a, 8b. On activation of the binding tool 2 the locking means 29 lock the binding tool 2 to the moveable part 7. Following which the strap 3 is fed by the binding tool 2 around the at least one object 4 such as the air-line 4' and through the eyelet 24 of the clip 20 and back through a lock 32 (see Fig. 7) of the strap 3. The binding tool 2 tensions the strap 3 and cuts the free end of the strap 3 subsequently projecting from the lock 32 of the strap 3.

During the tensioning process, the moveably part 7 moves with the binding tool 2 towards the at least one object 4, neither the object 4 nor the clip 20 is moved during this process. This prevents a movement of the clip 20 relative to the object 4 from taking place during the attachment process. Due to the fact that the binding tool 2 moves to the object 4 and the fact that the position of the moveably part 7 is set relative to the clip receiving portion 18, the binding tool 2 can repeatable position clips 20 at objects 4 having the same diameter in an expedient manner such that the clips 20 radially project from the object 4 at a desired radial orientation.

In this connection it should be noted that the position and the orientation of the clip 20 is maintained in the clip receiving portion 18, such that the position and the orientation of the clip 20 does not change during the tensioning process.

This movement is sensor driven in dependence on the sensor signals delivered by the sensor 27. After the strap 3 has been cut, the locking means 29 disengage from the binding tool 2 and then the moveable part 7 is moved back to the start position.

If a set of two or more mounting modules 1 is provided, then the object 4 will be positioned at the respective mounting modules 1 prior to attaching the clips 20 to the object 4 by means of the straps 3. Then the operator moves the binding tool 2 from one mounting module 1 to the other following each attachment of the strap 3 to the respective clip 20 and the object 4.

As mentioned in the foregoing the system may comprise the evaluation unit. The evaluation unit is configured to evaluate the sensor signals provided by the sensor 27 in dependence on the presence of the upper jaw 22 of the binding tool 2 and to actuate a time-delayed movement of the moveable part 7 in dependence on the sensor signals by means of the pneumatic mechanism 14.

### List of reference numerals:

- 1: mounting module
- 2: binding tool
- 3, 3': strap, cable tie
- 4, 4': object, air-line
- 5: base part
- 6: object receiving portion
- 7: moveable part
- 8a, 8b: binding tool receiving portion
- 9: bush
- 10: top surface
- 11: bearing
- 12: U-shaped groove
- 13: base plate
- 14: pneumatic mechanism
- 15: mount
- 16: system
- 17: mounting surface
- 18: clip receiving portion
- 20: clip
- 21: guide groove
- 22: upper jaw
- 23: lower jaw
- 24: eyelet
- 25: trigger
- 26: object support
- 27: sensor
- 28: cable
- 29: locking means
- 30: elongate slot
- 31: support part
- 32: lock
- 33: sensor housing
- 34: engagement means
- 35: groove

- A: pivot axis
- L: longitudinal direction

## Claims

1. A mounting module (1) for a binding tool (2), the binding tool (2) being configured to attach a strap (3, 3'), such as a cable tie (3'), to at least one object (4, 4'),
the mounting module (1) comprising:
a base part (5) having an object receiving portion (6); and
a moveable part (7) having one or more binding tool receiving portions (8a, 8b) with the one or more binding tool receiving portions (8a, 8b) being configured to hold the binding tool (2) at a fixed position relative to the movable part (7), wherein the moveable part (7) is moveable relative to the base part (5) and the object receiving portion (6), **characterized in that** the moveable part (7) is configured to execute a combined linear and rotational movement, relative to the base part (5), wherein a linear and a rotational direction of movement of the movable part (7) can be adjusted to match the at least one object (4, 4'), wherein the moveable part (7) is configured such that a position thereof can be set relative to the object receiving portion (6) and the position can be set to conform to an outer diameter of the at least one object (4, 4'), and
wherein the moveable part (7) is supported at the base part (5) by guide means.

2. A mounting module (1) in accordance with claim 1,
wherein the object receiving portion (6) further comprises a clip receiving portion (18) that is configured to receive a clip (20) that can be attached to the at least one object (4, 4') by means of the strap (3, 3').

3. A mounting module (1) in accordance with claim 2,
wherein the clip receiving portion (18) is arranged in a top surface (10) of the object receiving portion (6) and the moveable part (7) is configured moveable relative to the clip receiving portion (18) such that a resultant position and/or orientation of the clip (20) can be set relative to the object (4) to which the clip (20) is to be attached.

4. A mounting module (1) in accordance with at least one of the preceding claims, further comprising a pneumatic mechanism (14) to bring about the movement of the binding tool receiving portions (8a, 8b) respectively of the moveable part (7) relative to the base part (5) and the clip receiving portion (18), preferably wherein the pneumatic mechanism (14) is pivot mounted at the base part (5).

5. A mounting module (1) in accordance with at least one of the preceding claims,
wherein the guide means comprise two or more ball bearings (11) or two or more inserts of a friction reducing material, the friction reducing material preferably being selected from the group of members consisting of POM, UHMW, Nylon, Acetal, PTFE, PET, PBT, PPS, PEEK and combinations thereof.

6. A mounting module (1) in accordance with at least one of the preceding claims,
wherein the guide means are aligned such that they form a pivot axis (A) about which the moveable part (7) can be tilted towards the object receiving portion (6).

7. A mounting module (1) in accordance with at least one of the preceding claims,
wherein the guide means are slideably supported at the base part (5), in particular are linearly slideably supported at the base part (5).

8. A mounting module (1) in accordance with claim 6 or claim 7,
wherein the base part (5) comprises two at least substantially U-shaped grooves (12) that are configured to support the two ball bearings (11).

9. A mounting module (1) in accordance with at least one of the preceding claims, further comprising two bushes (9) arranged between the base part (5) and the moveable part (7), preferably wherein the bushes (9) each comprise an elongate slot (30), with the moveable part (7) having two support parts (31) and with each support part (31) being supported in one of the elongate slots (30).

10. A mounting module (1) in accordance with claim 9,
wherein the two bushes (9) are configured to be rotated relative to the base part (5) such that the position of the moveable part (7) can be set relative to the object receiving portion (6).

11. A mounting module (1) in accordance with at least one of the preceding claims, wherein at least one of the one or more binding tool receiving portions (8a, 8b) comprises at least one locking means (29) configured to intermittently fix the binding tool (2) to the moveable part (7), preferably wherein the two binding tool receiving portions (8a, 8b) each have one locking means (29) that are arranged opposite one another at either sides of the object receiving portion (6).

12. A mounting module (1) in accordance with at least one of the preceding claims, further comprising at least one sensor (27) that is coupled to the moveable part (7) and is preferably configured to detect the presence and/or absence of a jaw (22) of the binding tool (2).

13. A mounting module (1) in accordance with claim 11 or claim 12, further comprising an evaluation unit, with the evaluation unit being configured to evaluate sensor signals provided by the sensor (27) in dependence on the presence and/or absence of the jaw (22) of the binding tool (2) and to actuate a movement of the moveable part (7) in dependence on the sensor signals; and/or with the evaluation unit being configured to control and actuate the movement of the moveable part (7) relative to the base part (5).

14. A system (16) comprising one or more mounting modules (1) in accordance with at least one of the preceding claims and a binding tool (2), wherein the one or more mounting modules (1) are configured to be mounted on a mounting surface (17) and optionally further comprising at least one of the mounting surface (17), a plurality of straps (3, 3') and a plurality of clips (20).

15. A method of attaching one or more clips (20) to an object (4, 4') using a system in accordance with claim 14, the object (4, 4') having a length extending generally in a longitudinal direction (L), wherein the one or more clips (20) are each attached to the object by means of a strap (3, 3'), wherein the strap (3, 3') is attached to the object (4, 4') and the one or more clips (20) in such a way that the one or more clips (20) extend from the object (4, 4') in a predefined radial direction with respect to the longitudinal direction (L).

## Patentansprüche

1. Befestigungsmodul (1) für ein Bindewerkzeug (2), wobei das Bindewerkzeug (2) dazu ausgebildet ist, ein Band (3, 3'), wie einen Kabelbinder (3'), an mindestens einem Objekt (4, 4') zu befestigen,
wobei das Montagemodul (1) umfasst:
ein Basisteil (5) mit einem Objektaufnahmeabschnitt (6); und
ein bewegliches Teil (7) mit einem oder mehreren Bindewerkzeug-Aufnahmeabschnitten (8a, 8b), wobei der eine oder die mehreren BindewerkzeugAufnahmeabschnitte (8a, 8b) konfiguriert sind, um das Bindewerkzeug (2) an einer festen Position relativ zu dem beweglichen Teil (7) zu halten, wobei das bewegliche Teil (7) relativ zum Basisteil (5) und dem Objektaufnahmeabschnitt (6) beweglich ist, **dadurch gekennzeichnet, dass** das bewegliche Teil (7) dazu ausgebildet ist, eine kombinierte Linear- und Drehbewegung relativ zum Basisteil (5) auszuführen, wobei eine Linear- und eine Drehbewegungsrichtung des beweglichen Teils (7) eingestellt werden können, um das mindestens eine Objekt (4, 4') anzupassen, wobei das bewegliche Teil (7) so konfiguriert ist, dass seine Position relativ zu dem Objektaufnahmeabschnitt (6) eingestellt werden kann, und die Position eingestellt werden kann, um mit einem Außendurchmesser des mindestens eines Objekts (4, 4') übereinzustimmen, und wobei das bewegliche Teil (7) durch ein Führungsmittel am Basisteil (5) gelagert ist.

2. Montagemodul (1) nach Anspruch 1,
wobei der Objektaufnahmeabschnitt (6) ferner einen Clipaufnahmeabschnitt (18) umfasst, der dazu eingerichtet ist, einen Clip (20) aufzunehmen, der mittels des Riemens (3, 3') an dem mindestens einen Objekt (4, 4') befestigt werden kann.

3. Montagemodul (1) nach Anspruch 2,
wobei der Clipaufnahmeabschnitt (18) in einer oberen Fläche (10) des Objektaufnahmeabschnitts (6) angeordnet ist und das bewegliche Teil (7) relativ zum Clipaufnahmeabschnitt (18) beweglich konfiguriert ist, so dass eine resultierende Position und /oder Orientierung des Clips (20) relativ zu dem Objekt (4) einstellbar ist, an dem der Clip (20) befestigt werden soll.

4. Montagemodul (1) nach einem der vorhergehenden Ansprüche, ferner umfassend einen pneumatischen Mechanismus (14), um die Bewegung der Bindewerkzeugaufnahmeabschnitte (8a, 8b) bzw. des beweglichen Teils (7) relativ zu dem Basisteil (5) und dem Clipaufnahmeabschnitt (18) zu bewirken, wobei vorzugsweise der pneumatische Mechanismus (14) am Basisteil (5) schwenkbar gelagert ist.

5. Montagemodul (1) nach einem der vorhergehenden Ansprüche,
wobei die Führungsmittel zwei oder mehr Kugellager (11) oder zwei oder mehr Einsätze aus einem reibungsmindernden Material umfassen, wobei das reibungsmindernde Material vorzugsweise aus der Gruppe von Elementen ausgewählt ist, die aus POM, UHMW, Nylon, Acetal, PTFE, PET, PBT, PPS, PEEK und Kombinationen davon besteht.

6. Montagemodul (1) nach einem der vorhergehenden Ansprüche,
wobei die Führungsmittel so ausgerichtet sind, dass sie eine Schwenkachse (A) bilden, um die das bewegliche Teil (7) in Richtung auf den Objektaufnahmeabschnitt (6) gekippt werden kann.

7. Montagemodul (1) nach einem der vorhergehenden Ansprüche,
wobei die Führungsmittel am Basisteil (5) verschiebbar gelagert sind, insbesondere am Basisteil (5) linear verschiebbar gelagert sind.

8. Montagemodul (1) nach einem der Ansprüche 6 oder 7,
wobei das Basisteil (5) zwei zumindest im Wesentlichen U-förmige Nuten (12) umfasst, die konfiguriert sind, um die zwei Kugellager (11) zu tragen.

9. Montagemodul (1) nach einem der vorhergehenden Ansprüche, ferner umfassend zwei zwischen dem Basisteil (5) und dem beweglichen Teil (7) angeordnete Buchsen (9), wobei vorzugsweise die Buchsen (9) jeweils einen Langschlitz (30) umfassen, wobei das bewegliche Teil (7) zwei Trägerteile (31) aufweist und wobei jedes Trägerteil (31) in einem der Langschlitze (30) gelagert ist.

10. Montagemodul (1) nach Anspruch 9,
wobei die beiden Buchsen (9) relativ zum Basisteil (5) drehbar konfiguriert sind, so dass die Position des beweglichen Teils (7) relativ zum Objektaufnahmeabschnitt (6) eingestellt werden kann.

11. Befestigungsmodul (1) nach einem der vorhergehenden Ansprüche, wobei mindestens einer der einen oder mehreren Bindungswerkzeug-Aufnahmeabschnitte (8a, 8b) mindestens ein Verriegelungsmittel (29) umfasst, das konfiguriert ist, um das Bindungswerkzeug (2) intermittierend an dem beweglichen Teil (7) zu fixieren, wobei vorzugsweise die beiden Bindewerkzeugaufnahmeabschnitte (8a, 8b) jeweils ein Verriegelungsmittel (29) aufweisen, die beidseits des Objektaufnahmeabschnitts (6) einander gegenüberliegend angeordnet sind.

12. Montagemodul (1) nach mindestens einem der vorhergehenden Ansprüche, ferner umfassend mindestens einen Sensor (27), der mit dem beweglichen Teil (7) gekoppelt ist und vorzugsweise eingerichtet ist, die Anwesenheit und/oder Abwesenheit einer Backe (22) des Bindewerkzeugs (2) zu detektieren.

13. Montagemodul (1) nach einem der Ansprüche 11 oder 12, ferner umfassend eine Bewertungseinheit, wobei die Bewertungseinheit dazu eingerichtet ist, von dem Sensor (27) bereitgestellte Sensorsignale in Abhängigkeit von der Anwesenheit und/oder Abwesenheit der Backe (22) des Bindewerkzeugs (2) zu bewerten und eine Bewegung des beweglichen Teils (7) in Abhängigkeit von den Sensorsignalen auszulösen; und/oder wobei die Bewertungseinheit dazu eingerichtet ist, die Bewegung des beweglichen Teils (7) relativ zum Basisteil (5) zu steuern und zu betätigen.

14. System (16) mit einem oder mehreren Montagemodulen (1) nach einem der vorhergehenden Ansprüche und einem Bindewerkzeug (2), wobei das eine oder die mehreren Montagemodule (1) dazu konfiguriert sind, an einer Montagefläche (17) montiert zu werden und optional ferner umfassend mindestens eine von der Montagefläche (17), einer Vielzahl von Riemen (3, 3') und einer Vielzahl von Clips (20).

15. Verfahren zum Anbringen eines oder mehrerer Clips (20) an einem Objekt (4, 4') unter Verwendung eines Systems nach Anspruch 14, wobei das Objekt (4, 4') eine Länge aufweist, die sich im Allgemeinen in einer Längsrichtung (L) erstreckt, wobei der eine oder die mehreren Clips (20) jeweils mittels eines Bandes (3, 3') am Objekt befestigt sind, wobei das Band (3, 3') am Objekt (4, 4') und dem einen oder den mehreren Clips (20) derart befestigt ist, dass sich der eine oder die mehreren Clips (20) von dem Objekt (4, 4') in einer vordefinierten radialen Richtung bezüglich der Längsrichtung (L) erstrecken.

## Revendications

1. Module de montage (1) pour un outil de liaison (2), l'outil de liaison (2) étant configuré pour fixer une pince (3, 3'), comme une attache de câble (3'), à au moins un objet (4, 4'),
le module de montage (1) comprenant :
une partie de base (5) ayant une portion de réception d'objet (6) ; et
une partie déplaçable (7) ayant une ou plusieurs portions de réception d'outil de liaison (8a, 8b) avec lesdites une ou plusieurs portions de réception d'outil (8a, 8b) étant configurées pour maintenir l'outil de liaison (2) à une position fixe relativement à la partie déplaçable (7), dans lequel la partie déplaçable (7) est déplaçable relativement la partie de base (5) et à la portion de réception d'objet (6),
**caractérisé en ce que**
la partie déplaçable (7) est configurée pour exécuter un déplacement linéaire et rotatif combiné, relativement à la partie de base (5), dans lequel une direction linéaire et une direction rotative du déplacement de la partie déplaçable (7) peut être ajustée pour s'accorder avec ledit au moins un objet (4, 4'), dans lequel la partie déplaçable (7) est configurée de sorte qu'une position de celle-ci peut-être définie relativement à la portion de réception d'objet (6) et la position peut-être définie pour se conformer à un diamètre extérieur dudit au moins un objet (4, 4'), et dans lequel la partie déplaçable (7) est supportée au niveau de la partie de base (5) par un moyen de guidage.

2. Module de montage (1) selon la revendication 1,
dans lequel la portion de réception d'objet (6) comprend en outre une portion de réception de pince (18) qui est configurée pour recevoir une pince (20) qui peut être attachée audit au moins un objet (4, 4') au moyen de la bride (3, 3').

3. Module de montage (1) selon la revendication 2,
dans lequel la portion de réception de pince (18) est agencée dans une surface de sommet (10) de la portion de réception d'objet (6) et la partie déplaçable (7) est configurée de manière déplaçable relativement à la portion de réception de pince (18) de sorte qu'une position et/ou une orientation résultantes de la pince (20) peut-être définie relativement à l'objet (4) auquel la pince (20) doit être attachée.

4. Module de montage (1) selon l'une au moins des revendications précédentes, comprenant en outre un mécanisme pneumatique (14) pour provoquer le déplacement des portions de réception d'outil de liaison (8a, 8b) respectivement de la partie déplaçable (7) relativement à la partie de base (5) et à la portion de réception de pince (18), de préférence dans lequel le mécanisme pneumatique (14) est un pivot monté au niveau de la partie de base (5).

5. Module de montage (1) selon l'une au moins des revendications précédentes,
dans lequel le moyen de guidage comprend deux ou plusieurs roulements à billes (11) ou deux ou plusieurs inserts d'un matériau de réduction de friction, le matériau de réduction de friction étant de préférence sélectionné parmi le groupe d'éléments constitué de : POM, UHMW, nylon, acétal, PTFE, PET, PBT, PPS, PEEK et des combinaisons de ceux-ci.

6. Module de montage (1) selon l'une au moins des revendications précédentes,
dans lequel le moyen de guidage est aligné de manière à former un axe de pivot (A) autour duquel la partie déplaçable (7) peut être inclinée vers la portion de réception d'objet (6).

7. Module de montage (1) selon l'une au moins des revendications précédentes,
dans lequel le moyen de guidage est supporté par coulissement au niveau de la partie de base (5), en particulier est supporté par coulissement linéaire au niveau de la partie de base (5).

8. Module de montage (1) selon la revendication 6 ou 7,
dans lequel la partie de base (5) comprend deux gorges (12) au moins sensiblement en forme de U qui sont configurées pour supporter les deux roulements à billes (11).

9. Module de montage (1) selon l'une au moins des revendications précédentes, comprenant en outre deux manchons (9) agencés entre la partie de base (5) et la partie déplaçable (7), de préférence dans lequel les manchons (9) comprennent chacun une fente allongée (30), avec la partie déplaçable (7) ayant deux parties de support (31) et avec chaque partie de support (31) étant supportée dans une des fentes allongées (30).

10. Module de montage (1) selon la revendication 9,
dans lequel les deux manchons (9) sont configurés pour être mis en rotation relativement à la partie de base (5) de sorte que la position de la partie déplaçable (7) peut-être définie relativement à la portion de réception d'objet (6).

11. Module de montage (1) selon l'une au moins des revendications précédentes, dans lequel au moins une desdites une ou plusieurs portions de réception d'outil de liaison (8a, 8b) comprend au moins un moyen de verrouillage (29) configuré pour fixer par intermittence l'outil de liaison (2) à la partie déplaçable (7), de préférence dans lequel les deux portions de réception d'outil de liaison (8a, 8b) ont chacune un moyen de verrouillage (29) qui sont agencés l'un en face de l'autre de part et d'autre de la portion de réception d'objet (6).

12. Module de montage (1) selon l'une au moins des revendications précédentes, comprenant en outre au moins un capteur (27) qui est couplé à la partie déplaçable (7) et qui est de préférence configuré pour détecter la présence et/ou l'absence d'une mâchoire (22) de l'outil de liaison (2).

13. Module de montage (1) selon la revendication 11 ou 12, comprenant en outre une unité d'évaluation, avec l'unité d'évaluation étant configurée pour évaluer des signaux de capteur fournis par le capteur (27) en dépendance de la présence et/ou de l'absence de la mâchoire (22) de l'outil de liaison (2) et pour actionner un déplacement de la partie déplaçable (7) en dépendance des signaux de capteur ; et/ou avec l'unité d'évaluation étant configurée pour commander et actionner le déplacement de la partie déplaçable (7) relativement à la partie de base (5).

14. Système (16) comprenant un ou plusieurs modules de montage (1) selon l'une au moins des revendications précédentes et un outil de liaison (2), dans lequel lesdits un ou plusieurs modules de montage (1) sont configurés pour être montés sur une surface de montage (17), et comprenant en outre en option au moins un élément parmi la surface de montage (17), une pluralité de brides (3, 3') et une pluralité de pinces (20).

15. Procédé pour attacher une ou plusieurs pinces (20) à un objet (4, 4') en utilisant un système selon la revendication 14, l'objet (4, 4') ayant une longueur s'étendant généralement dans une direction longitudinale (L), dans lequel lesdites une ou plusieurs pinces (20) sont chacune attachées à l'objet au moyen d'une bride (3, 3'), dans lequel la bride (3, 3') est attachée à l'objet (4, 4') et auxdites une ou plusieurs pinces (20) de telle manière que lesdites une ou plusieurs pinces (20) s'étendent depuis l'objet (4, 4') dans une direction radiale prédéfinie par rapport à la direction longitudinale (L).
